# EUROPEAN PATENT APPLICATION

(11) **EP 2 088 180 A1**
(43) Date of publication of application: **12.08.2009**
(21) Application number: 07832782.2
(22) Date of filing: 29.11.2007
(51) Int. Cl.: C09J 7/02, C08J 7/04, C09J 183/07

(54) **RELEASABLE ADHESIVE SHEET**

(30) Priority: 01.12.2006 JP 2006325349
(71) Applicant: Lintec Corporation, Itabashi-ku Tokyo 173-0001 (JP)
(72) Inventor: TANAKA, Atsuhiro, Tokyo 173-0001 (JP); SUZUKI, Tomomi, Tokyo 173-0001 (JP); HAYAKAWA, Fumio, Tokyo (JP); KUBOTA, Naoki, Tokyo (JP); IKEDA, Katsuhiko, Tokyo (JP)
(74) Representative: Gille Hrabal Struck Neidlein Prop Roos
(86) International application number: PCT/JP2007/073067
(87) International publication number: WO 2008/069096

(57) **Abstract**

Provided is a releasable pressure sensitive adhesive sheet, which is mainly used for a coating film for an automobile, and which is applicable to a coating film with insufficient curing immediately after drying. Specifically provided is a releasable pressure sensitive adhesive sheet to be adhered to a curable coating film, which has a pressure sensitive adhesive layer on at least one face of a substrate, in which the substrate has a Young's modulus "E" of 100 N/mm² or more, a thickness of 0.020 mm or more, and a bending stress coefficient "k" (k=Eh³) of 0.038N·mm or more when the thickness of the substrate is set to "h" (mm).

## Description

### Technical Field

The present invention relates to a releasable pressure sensitive adhesive sheet mainly used as a protective sheet or tape for a curable coating film for an automobile, and more specifically, to a releasable pressure sensitive adhesive sheet mainly used as a protective sheet or tape for a urethane-based curable coating film for an automobile, the releasable pressure sensitive adhesive sheet having the following characteristics: the releasable pressure sensitive adhesive sheet neither deteriorates nor discolors a coating film applied to the body or parts of an automobile, and is excellent also in releasability after having been stuck for a long time period.
The releasable pressure sensitive adhesive sheet of the present invention is a releasable pressure sensitive adhesive sheet applicable to an incompletely cured curable coating film which is apt to deform and which has the following drawback: the coating film is dried to such an insufficient extent that a trace amount of a solvent remains in the coating film, or the coating film is formed of a paint which cures insufficiently after having been dried. The releasable pressure sensitive adhesive sheet is particularly usable as a releasable pressure sensitive adhesive sheet for a protective sheet or tape for a plastic part for an automobile coated with a urethane-based paint, such as a bumper.

### Background Art

The following inconvenience occurs in the transport of an automobile: a coating film for the body or parts of the automobile becomes lackluster, discolors, or is damaged owing to contact with a suspended solid such as dust, dirt, rain, or pollen, a colliding substance such as sand, and workers. Attempts have been made to apply a wax-based material, or to stick a protective sheet or tape, to the coating film for the body or parts of the automobile for preventing such the inconvenience.
However, in curing of the coating film applied to the body or parts by heating, the curing reaction of the coating film may not proceed sufficiently even after the coating film has been passed through a drying furnace.
In particular, a bumper as one of the parts of the automobile has been recently made of a synthetic resin instead of a metal that has been conventionally used in order that the weight of the bumper may be reduced, and the surface of the bumper made of a synthetic resin is typically coated in order that the external appearance of the bumper may be made beautiful. Attempts have been made to stick a protective sheet or tape to the bumper made of a synthetic resin as well for preventing such the inconvenience as described above.
However, in curing of the coating film applied to the bumper made of a synthetic resin by heating, the curing temperature cannot be increased so that the resin used in the bumper may not be adversely affected, for example, may not be deteriorated or deformed (In ordinary cases, the coating film is dried at a temperature as low as about 60 to 80°C for about 20 to 30 minutes. A temperature higher than the foregoing results in the occurrence of the deformation of the bumper, and the drying time cannot be lengthened so that an energy consumption and a processing time may be educed). Accordingly, even after the bumper made of a resin coated with the coating film has been passed through a drying furnace, a trace amount of a solvent may remain in the coating film owing to insufficient drying of the coating film, or a curing reaction may not proceed sufficiently in the coating film. When a crease or air bubble is incorporated in sticking of a protective sheet or tape to such a coating film which is apt to deform, the curing reaction of the coating film to which the protective sheet or tape has been stuck proceeds over time, and the curing proceeds completely while the irregularities of the protective sheet or tape are transferred onto the coating film. Accordingly, after the protective sheet or tape has been released from the coating film, the coating film involves the emergence of a serious problem in terms of external appearance thereof.
The following products have been proposed as examples of the protective sheet or tape for the coating film: a product obtained by providing a polyisobutylene-based pressure sensitive adhesive layer on a supporting substrate (for example, Patent Document 1), a product obtained by providing, on a supporting substrate, a pressure sensitive adhesive layer composed of a butyl rubber or styrene-ethylene/butylene copolymer-styrene (for example, Patent Document 2), a product obtained by providing, on a supporting substrate, a layer composed of a composition prepared by mixing a polyisobutylene-based pressure sensitive adhesive with a small amount of an acryl-based pressure sensitive adhesive (for example, Patent Document 3), a product obtained by providing, on a supporting substrate, a layer composed of a composition prepared by blending an acryl-based pressure sensitive adhesive with a polyfunctional isocyanate compound (for example, Patent Document 4), a product obtained by providing an ethylene-vinyl acetate-glycidyl methacrylate copolymer on a supporting substrate (for example, Patent Document 5), and a product obtained by providing, on a supporting substrate, a pressure sensitive adhesive layer obtained by the photo-curing of a resin mainly composed of an ionomer obtained by bonding molecules of an ethylene-methacrylic acid copolymer with a metal ion (for example, Patent Document 6).
The following product has also been proposed (for example, Patent Document 7) : a product obtained by providing, on a supporting substrate, a pressure sensitive adhesive layer obtained by cross-linking a resin composition, which contains a uretharae(meth)acrylate having a hydrogenated polybutadiene skeleton and an alkyl (meth) acrylate having 6 or more carbon atoms, with an active energy beam.
However, the performance of a protective sheet or tape for a urethane-based coating film for an automobile having such a pressure sensitive adhesive layer as described above is still insufficient.

Patent Document 1: JP 9-104850 A
Patent Document 2: JP 9-291262 A
Patent Document 3: JP 6-073352 A
Patent Document 4: JP 8-143830 A
Patent Document 5: JP 10-121002 A
Patent Document 6: JP 10-121010 A
Patent Document 7: JP 2002-309185 A

### Disclosure of the Invention

### Problems to be solved by the Invention

In view of such circumstances, an object of the present invention is to solve a problem by traces on a coating film in the vicinity of crease portions or air bubble portions in a releasable pressure sensitive adhesive sheet to be mainly used as a protective sheet or tape for a curable coating film for an automobile.

### Means for solving the Problems

The inventors of the present invention have made various studies. As a result, the inventors have found that the size of a crease or air bubble to be produced can be controlled by setting the bending stress coefficient of a substrate in a releasable pressure sensitive adhesive sheet to a predetermined numerical value or more Thus, the inventors have completed the present invention.

That is, the present invention provides the following items (1) to (5) :
(1) A releasable pressure sensitive adhesive sheet to be stuck to a curable coating film, the releasable pressure sensitive adhesive sheet including a pressure sensitive adhesive layer on at least one face of a substrate, in which: the substrate has a Young's modulus "E" of 100 N/mm² or more and a thickness of 0.02 mm or more; and a bending stress coefficient "k" (k=Eh³) when the thickness of the substrate is set to "h" (mm) is 0.038 N·mm or more;
(2) A releasable pressure sensitive adhesive sheet according to the item (1), in which the curable coating film has an elastic modulus at 23°C measured by a nano-indentation method of 0.5 to 3.5 GPa;
(3) A releasable pressure sensitive adhesive sheet according to the item (1) or (2), in which the curable coating film includes a coating film formed of a urethane-based paint;
(4) A releasable pressure sensitive adhesive sheet according to the item (1) or (2), in which the pressure sensitive adhesive layer includes a layer formed of an addition reaction type, silicone-based pressure sensitive adhesive; and
(5) A releasable pressure sensitive adhesive sheet according to the item (1) or (2), in which the curable coating film is formed on a plastic part for an automobile.

### Effect by the Invention

According to the present invention, there is provided a releasable pressure sensitive adhesive sheet mainly usable as a protective sheet or tape for a cured coating film applied to the body or parts of an automobile, or especially an incompletely cured curable coating film applied to a plastic part such as a film-coated bumper having the following drawback: the coating film is dried to such an insufficient extent that a trace amount of a solvent remains immediately after the drying, or the coating film is cured to such an insufficient extent as to be apt to deform. Best Mode for carrying out the Invention

Hereinafter, the present invention will be described in detail.
In the releasable pressure sensitive adhesive sheet of the present invention, the Young's modulus "E" of the substrate (hereinafter simply referred to as Young's modulus "E") is 100 N/mm² or more, or preferably 200 to 5, 000 N/mm². The term Young's modulus "E" as used herein refers to a numerical value measured on the basis of JIS K7127, and the measurement is performed at a testing rate of 200 mm/min while the direction in which a resin flows at the time of the production of the substrate is defined as a direction of measurement.
Setting the Young's modulus "E" to 100 N/mm² or more eliminates the need for unnecessarily increasing the thickness of the substrate, and hence allows one to adjust the bending stress coefficient to be described later to a predetermined value or more while preventing the releasable pressure sensitive adhesive sheet from becoming costly or bulky. In contrast, setting the Young's modulus "E" to 5, 000 N/mm² or less can prevent the thickness of the substrate from becoming so small that the substrate becomes difficult to handle or has an insufficient strength.
The thickness of the substrate is 0.02 mm or more, or preferably 0. 025 to 0.150 mm. In the case of a polyethylene terephthalate film as a preferable substrate to be described later, the thickness is preferably 0.025 to 0.075 mm.
Setting the thickness of the substrate to 0.020 mm or more allows one to adjust the bending stress coefficient to be described later to a predetermined value or more even when a substrate having a low Young's modulus "E" is used. In addition, setting the thickness of the substrate to 0.150 mm or less prevents the bending stress coefficient from becoming so large that the substrate becomes difficult to handle, and prevents the releasable pressure sensitive adhesive sheet from becoming costly or bulky.
In the releasable pressure sensitive adhesive sheet of the present invention, the bending stress coefficient "k" (k=Eh³) when the thickness of the substrate is set to "h" (mm) must be 0.038 N·mm or more on the premise that the Young's modulus "E" and thickness of the substrate satisfy the above conditions.
The bending stress coefficient "k" is preferably 0.050 N·mm or more, or more preferably 0.055 N·mm or more. Setting the bending stress coefficient "k" to 0.038 N·mm or more can prevent the angle of the apex of a crease to be produced at the time of the sticking of the releasable pressure sensitive adhesive sheet from becoming acute, i.e., can control the size of the crease. An upper limit for the bending stress coefficient "k" is about 17 N·mm from the viewpoints of the maintenance of the flexibility of the releasable pressure sensitive adhesive sheet and the prevention of increases in cost for, and bulkiness of, the releasable pressure sensitive adhesive sheet.

As a material of the substrate for the releasable pressure sensitive adhesive sheet of the present invention, there may be used a film formed of a polyester such as polyethylene terephthalate or polyethylene naphthalate, a polycarbonate, a polyolefin such as a polyethylene or polypropylene, a polyimide, a polyether imide, a polyaramide, a polyether ketone, a polyether ether ketone, a polyphenylene sulfide, poly(4-methylpentene-1), an ethylene copolymer such as an ethylene-propylene copolymer, an ethylene-vinyl acetate copolymer, or an ionomer, or a thermoplastic elastomer such as a thermoplastic polyolefin or a thermoplastic polyester elastomer. Those films may be mixtures of one or more kinds of the materials. Further, the films may be unstretched, uniaxially stretched, or biaxially stretched. Of those, from the viewpoints of transparency, shock resistance, economical efficiency, and ease of handling, a film made of a polyethylene terephthalate or a polycarbonate is preferred.
An ultraviolet ray-absorbing agent, a light stabilizer, or an antioxidant may be added to the substrate. As the ultraviolet ray-absorbing agent, there may be used a benzotriazole-based, benzophenone-based, salicylate-based, or cyanoacrylate-based organic substance, or an inorganic substance such as titanium oxide, calciumcarbonate, or zinc oxide. As the light stabilizer, a hindered amine-based or hindered phenol-based light stabilizer may be used.
As the antioxidant, a phosphorus-based or sulfur-based antioxidant is exemplified. A substrate composed of a film can be produced by an extrusion molding mode based on a T-die method or inflation method, a calender mode, or a solution casting method, though the applicable method varies depending on a material for the substrate. In addition, the substrate can be subjected to uniaxial stretching or biaxial stretching such as a tenter method or tubular method so as to be stretched. When films made of the same material are classified into one that is stretched and one that is not stretched, the former is typically better than the latter because the stretching is effective particularly in obtaining a high Young's modulus.

The step height of the deformation trace of a coating film occurring in the rising portion of the substrate at crease portion thereof or air bubble portion from the coating film becomes sharper and more conspicuous as the angle of the apex of the crease or air bubble becomes more acute. Accordingly, making the substrate at the crease or air bubble portions hard to bend, i.e., hard to fold is effective in preventing the angle of the apex of the crease or air bubble to be produced frombecoming acute. Setting the bending stress coefficient "k" to 0.038 N·mm or more as in the present invention can provide a substrate having the following characteristic: the angle of the apex of the crease or air bubble to be produced does not become acute, so the substrate is hard to fold.
Setting the Young's modulus "E" to be higher is advantageous to increase the bending stress coefficient "k" in the relationship. Particularly when the releasable pressure sensitive adhesive sheet has a large area, a high Young's modulus is advantageous from the viewpoint of the ease with which the sheet is stuck to an adherend: the sheet, if substrate thereof has a high Young's modulus, has "stiffness", so the sheet can be easily stuck to the adherend. The Young's modulus "E" is also associated with the strength and elongation of the substrate; when the Young's modulus "E" is low, the substrate easily expands or contracts at the time of the application of, for example, heat or light to the substrate, so the stress of the substrate is applied to the coating film to cause the deformation of the coating film.
The selection of a resin to serve as the substrate as well as the stretching is one method of setting the Young's modulus "E" of the substrate to a large value of 100 N/mm² or more; when substrates made of the same resin are classified into one that is treated by any such approach as described below and one that is not treated by the approach, the former can be better than the latter: the molecular weight of the resin to serve as a substrate is increased, a cross-linked portion is introduced into a molecule of the resin, an organic or inorganic pigment is mixed into the resin, or the resin is mixed with a resin having a high elastic modulus.
The substrate may be subjected to an appropriate surface treatment, e.g., an electrochemical treatment such as a corona discharge treatment, a plasma treatment, or a sputtering treatment as required in order that adhesion thereof with a pressure sensitive adhesive or a release agent to be described later may be improved.

A pressure sensitive adhesive that can be used is not particularly limited, and an addition reaction type silicone-based pressure sensitive adhesive, an acryl-based pressure sensitive adhesive, a rubber-based pressure sensitive adhesive using polyisobutylene as a pressure sensitive adhesive component, a urethane-based pressure sensitive adhesive, an ester-based pressure sensitive adhesive, or the like can be used.
Of those, the addition reaction type, silicone-based pressure sensitive adhesive excellent in releasability from an adherend (incompletely cured curable coating film) is particularly preferable.
The pressure sensitive adhesive layer can be blended with an ultraviolet ray absorber as required so that weatherability thereof maybe improved. Anyone of those exemplified above for the substrate is used as the ultraviolet ray absorber. The loading of the ultraviolet ray absorber in the pressure sensitive adhesive layer is preferably 0.1 to 5% by mass, or particularly preferably 3% by mass or less.

In the releasable pressure sensitive adhesive sheet of the present invention, the pressure sensitive adhesive layer formed on the substrate has a thickness of typically about 1 to 50 µm, or preferably about 5 to 30 µm. Setting the thickness of the pressure sensitive adhesive layer to 1 µm or more allows one to secure a pressure sensitive adhesive force and a cohesive force (holding power) needed for the releasable pressure sensitive adhesive sheet to be used as, for example, a protective sheet or tape for a urethane-based coating film for an automobile. In addition, setting the thickness to 50 µm or less can prevent the extension of the pressure sensitive adhesive layer from an edge of the releasable pressure sensitive adhesive sheet as well as an increase in cost for the production of the releasable pressure sensitive adhesive sheet.

In the releasable pressure sensitive adhesive sheet of the present invention, the pressure sensitive adhesive layer is formed on at least one face of the substrate.
When the pressure sensitive adhesive layer is formed only on one face of the substrate, the releasable pressure sensitive adhesive sheet of the present invention is used as a protective sheet or tape for, for example, a plastic part for an automobile.

When the pressure sensitive adhesive layer in the releasable pressure sensitive adhesive sheet of the present invention is formed only on one face of the substrate, a release agent is typically applied to the opposite face of the substrate and dried so that a release agent layer may be formed, and, after that, a commercial product in one of the following forms can be provided: the releasable pressure sensitive adhesive sheets of the above kind are sequentially laminated so that the pressure sensitive adhesive layer of one releasable pressure sensitive adhesive sheet and the release agent layer of another releasable pressure sensitive adhesive sheet may contact each other, or the releasable pressure sensitive adhesive sheet is wound in such a roll shape that the pressure sensitive adhesive layer is placed inside the roll. Further, a commercial product in the following form can also be provided: the release agent layer of a release material having the release agent layer formed on one of faces thereof is stuck to the pressure sensitive adhesive layer of the releasable pressure sensitive adhesive sheet composed of the substrate and the pressure sensitive adhesive layer.
When the pressure sensitive adhesive layer is formed on each of both faces of the substrate, a commercial product in the following form can be provided: the release agent layers of two release materials each having a release agent layer formed on one of faces thereof are stuck to the pressure sensitive adhesive layers on both faces of the releasable pressure sensitive adhesive sheet.

Examples of the release agent used in forming a release agent layer include a urethane-based release agent of a polyvinyl alcohol obtained by adding a long-chain alkyl isocyanate to a silicon-based, fluorine resin-based, or wax-based polyvinyl alcohol, a urethane-based release agent obtained by adding a long-chain alkyl isocyanate to a polyethylene/vinyl alcohol copolymer, and a urea-based release agent formed of a polyalkylene imine obtained by adding a long-chain alkyl isocyanate to polyalkylene imine.

The thickness of the release agent layer formed on the substrate or the release material is typically 0.05 to 5 µm, or preferably about 0.1 to 1 µm. Setting the thickness of the release agent layer to 0.05 µm or more sufficiently secures the wettability of (the solution of) the release agent for the substrate or the release material described above. Setting the thickness to 5 µm or less can prevent the use of an unnecessary release agent.

The releasable pressure sensitive adhesive sheet of the present invention mainly used as a protective sheet or tape for a curable coating film for an automobile exerts an effect particularly when the curable coating film as an adherend has an elastic modulus at 23°C measured by a nano-indentation method of 0.5 GPa to 3.5 GPa, or more particularly when the curable coating film is a coating film formed of a urethane-based paint.

### Examples

Subsequently, the present invention will be described in more detail byway of examples and comparative examples. However, the present invention is by no means limited by examples thereof.
<Evaluation items and evaluation methods>
A two-part polyurethane-based clear paint for an automobile [a mixture of 100 parts by mass of a Quartz Clear Z manufactured by Kansai Paint Company, Limited and 40 parts by mass of an isocyanate-based curing agent [manufactured by Kansai Paint Company, Limited, a multi curing agent for plastics] was sprayed onto a plate made of a polyolefin-based thermoplastic elastomer to which a primer and an intermediate paint had been applied so that the thickness of the clear paint might be about 20 µm. Then, the clear paint was dried at 60°C for 30 minutes, and was left to stand at room temperature for 30 minutes, whereby an incompletely cured curable coating film was formed. After that, each of the releasable pressure sensitive adhesive sheets obtained in Examples and Comparative Examples described below was cut into pieces of 5 cm by 7 cm in square shape, and each of the pieces was stuck to the coating film so that fine creases and air bubbles are formed.
A test method and test conditions are as described below.
After having been left to stand at room temperature for one week, the releasable pressure sensitive adhesive sheet was released. At that time, the presence or absence of the traces of crease portions and air bubble portions was observed. The presence or absence was visually observed, and irregularities occurring at the traces were subjected to measurement with a surface roughness meter [a surface appearance analyzer SURFTEST SV-3000 manufactured by Mitutoyo Corporation]. The elastic modulus at 23°C of the formed curable coating film at a position at a depth of 200 nm from the outermost layer of the coating film was measured with a nano indenter "Nano Indenter DCM" manufactured by MTS Systems Corporation in the United States of America. As a result, the elastic modulus was 0.7 GPa. The presence or absence of the traces of the crease portions and the air bubble portions was evaluated on the basis of the following criteria.
⊚: No step height can be observed.
○ step height can be slightly observed, and is 0.1 to 0.3 µm. Δ: step height can be observed, and is more than 0.3 µm and less than 1.0 µm.
×: A step height can be clearly observed, and is 1.0 µm or more.

### [Example 1]

A polyethylene terephthalate film "PET25T70" having a Young's modulus of 4, 000 N/mm² and a thickness of 0.025 mm manufactured by Toray Industries, Inc. was used as a substrate. A solution prepared by diluting a mixed liquid composed of 100 parts by mass of an addition reaction type silicone pressure sensitive adhesive "SD-4560PSA" containing a cross-linking agent and manufactured by Dow Corning Toray Co., Ltd. and 0.9 part by mass of a platinum catalyst "SRX-212" manufactured by Dow Corning Toray Co., Ltd. with 100 parts by mass of toluene was used as a pressure sensitive adhesive.
A polyethylene terephthalate film "SP-PET38YSD" having a thickness of 38 µm manufactured by Lintec Corporation was used as a release material coated with a fluorine resin as a release agent so that the thickness of the resin might be 0.3 µm.
The above solution was applied to one face of the above substrate by employing a knife coating method so that the thickness of the solution after drying might be 30 µm. Then, the solution was dried at 130°C for 5 minutes, whereby a pressure sensitive adhesive layer was formed. The pressure sensitive adhesive layer was stuck to the face of the above release material coated with the fluorine resin, whereby the releasable pressure sensitive adhesive sheet of the present invention was produced.

### [Example 2]

The releasable pressure sensitive adhesive sheet of the present invention was produced in the same manner as in Example 1 except that a polyethylene terephthalate film "PET25Q-37" having a Young's modulus of 3, 500 N/mm² and a thickness of 0. 025 mm manufactured by Toray Industries, Inc. was used as a substrate.

### [Example 3]

The releasable pressure sensitive adhesive sheet of the present invention was produced in the same manner as in Example 1 except that a polyethylene terephthalate film "PET50 T60" having a Young's modulus of 4,200 N/mm² and a thickness of 0.050 mm manufactured by Toray Industries, Inc. was used as a substrate.

### [Example 4]

The releasable pressure sensitive adhesive sheet of the present invention was produced in the same manner as in Example 1 except that a polycarbonate film "LEAN 8010" having a Young's modulus of 2,150 N/mm² and a thickness of 0.100 mm manufactured by Asahi Glass Co., Ltd. was used as a substrate.

### [Comparative Example 1]

The releasable pressure sensitive adhesive sheet of the present invention was produced in the same manner as in Example 1 except that a polyethylene terephthalate film "PET16 T60" having a Young's modulus of 4,000 N/mm² and a thickness of 0.016 mm manufactured by Toray Industries, Inc. was used as a substrate.

### [Comparative Example 2]

The releasable pressure sensitive adhesive sheet of the present invention was produced in the same manner as in Example 1 except that a polyethylene film "PE WADATOUMEI50 KA140" having a Young's modulus of 210 N/mm² and a thickness of 0.050 mm manufactured by J-Film Corporation, Inc. was used as a substrate.

### [Comparative Example 3]

A film having a thickness of 0.035 mm and a Young's modulus of 850 N/mm² to serve as a substrate was produced by extruding a mixture of 60 parts by mass of a propylene homopolymer, 35 parts by mass of a propylene random polymer, and 5 parts by mass of titanium oxide with a T-die.
A solution prepared by diluting a pressure sensitive adhesive composed of polyisobutylene having a viscosity-average molecular weight of 800,000 (Oppanol B80 manufactured by BASF) with toluene so that the solution might have a concentration of 30% by mass was used as a pressure sensitive adhesive. The solution was applied to the film by employing a knife coating method so that the thickness of the solution after drying might be 20 µm. Then, the solution was dried at 90°C for 3 minutes, whereby a releasable pressure sensitive adhesive sheet for comparison was produced.

[Table 1]

**Table 1**

| | Young's modulus "E" (N/mm²) | Substrate thickness "h" (mm) | Bending stress coefficient "k" (N·mm) | Traces of crease portions and air bubbles | Material for substrate |
|---|---|---|---|---|---|
| Example 1 | 4,000 | 0.025 | 0.063 | ○ | PET |
| Example 2 | 3,500 | 0.025 | 0.055 | ○ | PET |
| Example 3 | 4,200 | 0.050 | 0.525 | ⊚ | PET |
| Example 4 | 2,150 | 0.100 | 2.150 | ⊚ | PC |
| Comparative Example 1 | 4, 000 | 0.016 | 0.016 | × | PET |
| Comparative Example 2 | 210 | 0.050 | 0.026 | × | PE |
| Comparative Example 3 | 850 | 0.035 | 0.036 | △ | PP |

In Table 1, the abbreviation "PET" represents polyethylene terephthalate, the abbreviation "PC" represents polycarbonate, the abbreviation "PE" represents polyethylene, and the abbreviation "PP" represents a polypropylene-based polymer.

As is apparent from the results of Table 1, the releasable pressure sensitive adhesive sheet of the present invention obtained in each example is superior to a releasable pressure sensitive adhesive sheet obtained in each comparative example because the coating film at crease portions or air bubble portions has no step height, or step height thereof can be slightly observed.

### Industrial Applicability

The releasable pressure sensitive adhesive sheet of the present invention is mainly used as a protective sheet or tape for a coating film for an automobile.

## Claims

1. A releasable pressure sensitive adhesive sheet to be stuck to a curable coating film, the releasable pressure sensitive adhesive sheet comprising a pressure sensitive adhesive layer on at least one face of a substrate, wherein:
the substrate has a Young's modulus "E" of 100 N/mm² or more and a thickness of 0.02 mm or more; and
a bending stress coefficient "k" (k=Eh³) when the thickness of the substrate is set to "h" (mm) is 0.038 N·mm or more.

2. The releasable pressure sensitive adhesive sheet according to claim 1, wherein the curable coating film has an elastic modulus at 23°C measured by a nano-indentation method of 0.5 to 3.5 GPa.

3. The releasable pressure sensitive adhesive sheet according to claim 1 or 2, wherein the curable coating film comprises a coating film formed of a urethane-based paint.

4. The releasable pressure sensitive adhesive sheet according to claim 1 or 2, wherein the pressure sensitive adhesive layer comprises a layer formed of an addition reaction type, silicone-based pressure sensitive adhesive.

5. The releasable pressure sensitive adhesive sheet according to claim 1 or 2, wherein the curable coating film is formed on a plastic part for an automobile.
